# EUROPEAN PATENT APPLICATION

(11) **EP 1 526 496 A2**
(43) Date of publication of application: **27.04.2005**
(21) Application number: 04256489.8
(22) Date of filing: 21.10.2004
(51) Int. Cl.: G09G 3/00

(54) **Display system for an interlaced image frame with a wobbling device**

(30) Priority: 23.10.2003 US 693287
(71) Applicant: Hewlett-Packard Development Company, L.P., Houston, TX 77070 (US)
(72) Inventor: Aufranc, Jr. Richard E., Albany, Or 97321 (US); Collins, David C., Philomath, Or 97370 (US); Howard, P. Guy, M/S 423C, Corvallis, OR 97330 (US)
(74) Representative: Jackson, Richard Eric

(57) **Abstract**

A display system (100) for displaying an interlaced image frame (122), having a top field (120) and a bottom field (121), includes an image processing unit (106) configured to process a stream of pixel data corresponding to the top and bottom fields (120,121) and generate a number of image sub-frames, a modulator (103) configured to generate a light beam bearing the number of image sub-frames, and a wobbling device (104) configured to displace the light beam such that each of the number of image sub-frames is spatially displayed in an image sub-frame location offset from image sub-frame locations of others of the image sub-frames. The image processing unit (106) processes the pixel data corresponding to the top field (120) to generate at least one of the number of image sub-frames and the pixel data corresponding to the bottom field (121) to generate at least one of the number of image sub-frames.

## Description

### BACKGROUND

A conventional system or device for displaying an image, such as a display, projector, or other imaging system, is frequently used to display a still or video image. Viewers evaluate display systems based on many criteria such as image size, contrast ratio, color purity, brightness, pixel color accuracy, and resolution. Pixel color accuracy and resolution are particularly important metrics in many display markets because the pixel color accuracy and resolution can limit the clarity and size of a displayed image.

A conventional display system produces a displayed image by addressing an array of pixels arranged in horizontal rows and vertical columns. Because pixels have a rectangular shape, it can be difficult to represent a diagonal or curved edge of an object in a image that is to be displayed without giving that edge a stair-stepped or jagged appearance. Furthermore, if one or more of the pixels of the display system is defective, the displayed image will replicated the defect. For example, if a pixel of the display system exhibits only an "off" position, the pixel may produce a solid black square in the displayed image.

Often, the input signal into a display system is an interlaced video signal. In interlaced video, individual interlaced image frames are represented by two consecutive fields. Each field contains every other horizontal line in the frame. A top field comprises the odd horizontal lines in the frame and a bottom field comprises the even horizontal lines in the frame. Thus, an image frame is displayed by sequentially displaying the top and bottom fields in any order. For example, a television may display an image on its screen by first displaying the top field over the entire screen and then by displaying the bottom field over the entire screen. The use of interlaced video often requires the display system to have large memory buffer capability to store incoming interlaced video data.

### BRIEF DESCRIPTION OF THE DRAWINGS

The accompanying drawings illustrate various embodiments of the present invention and are a part of the specification. The illustrated embodiments are merely examples of the present invention and do not limit the scope of the invention.

Fig. 1 illustrates an exemplary display system according to one exemplary embodiment.

Fig. 2 illustrates the relationship between two fields and their corresponding interlaced image frame that is to be displayed by the display system according to one exemplary embodiment.

Fig. 3 illustrates an exemplary interlaced video data sequence that may be input into the display system according to one exemplary embodiment.

Fig. 4 illustrates an exemplary display system with an expanded view of exemplary functions inside the image processing unit according to one exemplary embodiment.

Figs. 5A-C illustrate that a number of image sub-frames may be generated for a particular image according to one exemplary embodiment.

Figs. 6A-B illustrate displaying a pixel from the first sub-frame in a first image sub-frame location and displaying a pixel from the second sub-frame in the second image sub-frame location according to one exemplary embodiment.

Figs. 7A-D illustrate that the sub-frame generation function may define four image sub-frames for an image frame according to one exemplary embodiment.

Figs. 8A-D illustrate displaying a pixel from the first sub-frame in a first image sub-frame location, displaying a pixel from the second sub-frame in a second image sub-frame location, displaying a pixel from the third sub-frame in a third image sub-frame location, and displaying a pixel from the fourth sub-frame in a fourth image sub-frame location according to one exemplary embodiment.

Fig. 9 illustrates an exemplary method of generating a first and second image sub-frame corresponding to the top and bottom fields of an exemplary interlaced video data sequence according to one exemplary embodiment.

Fig. 10 illustrates another exemplary method that may be used to generate a first and second image sub-frame that are to be input into a modulator comprising one half the number of columns and lines of pixels than does the image frame defined by the interlaced video data sequence according to one exemplary embodiment.

Fig. 11 illustrates an exemplary method of generating first, second, third, and fourth image sub-frames that are to be displayed in four image sub-frame locations according to one exemplary embodiment.

Fig. 12 illustrates another exemplary method of generating first, second, third, and fourth image sub-frames that are to be displayed in four image sub-frame locations according to one exemplary embodiment.

Throughout the drawings, identical reference numbers designate similar, but not necessarily identical, elements.

### DETAILED DESCRIPTION

In the following description, for purposes of explanation, numerous specific details are set forth in order to provide a thorough understanding of the present display system. It will be apparent, however, to one skilled in the art that the present display system may be practiced without these specific details. Reference in the specification to "one embodiment" or "an embodiment" means that a particular feature, structure, or characteristic described in connection with the embodiment is included in at least one embodiment. The appearance of the phrase "in one embodiment" in various places in the specification are not necessarily all referring to the same embodiment.

The term "display system" will be used herein and in the appended claims, unless otherwise specifically denoted, to refer to a projector, projection system, image display system, television system, computer system, or any other system configured to display an image. The image may be a still image, series of images, or video. The term "image" will be used herein and in the appended claims, unless otherwise specifically denoted, to refer to a still image, series of images, video, or anything else that is displayed by a display system.

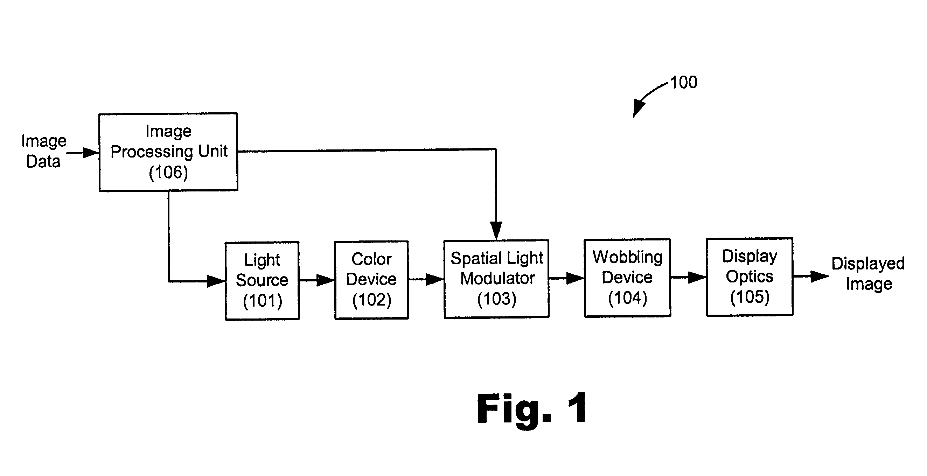

Fig. 1 illustrates an exemplary display system (100) according to an exemplary embodiment. The components of Fig. 1 are exemplary only and may be modified or changed as best serves a particular application. As shown in Fig. 1, image data is input into an image processing unit (106). The image data defines an image that is to be displayed by the display system (100). In one embodiment, the image data is interlaced video data. Although the following exemplary embodiments will be described with the image data being interlaced video data, it will be understood by one skilled in the art that the image data may be progressive video data or some other type of image data. Progressive video data is defined as video data comprising frames of data as opposed to fields of alternating lines of data. While one image is illustrated and described as being processed by the image processing unit (106), it will be understood by one skilled in the art that a plurality or series of images may be processed by the image processing unit (106). The image processing unit (106) performs various functions including controlling the illumination of a light source (101) and controlling a spatial light modulator (SLM) (103). The image processing unit (106) will be explained in more detail below.

As shown in Fig. 1, the light source (101) provides a beam of light to a color device (102). The light source (101) may be, but is not limited to, a high pressure mercury lamp. The color device (102) is optional and enables the display system (100) to display a color image. The color device (102) may be a sequential color device or a scrolling color device, for example.

Light transmitted by the color device (102) is focused onto the spatial light modulator (SLM) (103) through a lens or through some other device (not shown). SLMs are devices that modulate incident light in a spatial pattern corresponding to an electrical or optical input. The terms "SLM" and "modulator" will be used interchangeably herein to refer to a spatial light modulator. The incident light may be modulated in its phase, intensity, polarization, or direction. Thus, the SLM (103) of Fig. 1 modulates the light output by the color device (102) based on input from the image processing unit (106) to form an image bearing beam of light that is eventually displayed by display optics (105) on a viewing surface (not shown). The display optics (105) may comprise any device configured to display an image. For example, the display optics (105) may be, but is not limited to, a lens configured to project and focus an image onto a viewing surface. The viewing surface may be, but is not limited to, a screen, television, wall, liquid crystal display (LCD), or computer monitor.

The SLM (103) may be, but is not limited to, a liquid crystal on silicon (LCOS) array or a micromirror array. LCOS and micromirror arrays are known in the art and will not be explained in detail in the present specification. An exemplary, but not exclusive, LCOS array is the Philips™ LCOS modulator. An exemplary, but not exclusive, micromirror array is the Digital Light Processing (DLP) chip available from Texas Instruments Inc™.

Returning to Fig. 1, before the display optics (105) display the image, the modulated light may be passed through a "wobbling" device (104), according to an exemplary embodiment. A wobbling device, as will be described in detail below, is a device that is configured to enhance image resolution and hide pixel inaccuracies. An exemplary, but not exclusive, wobbling device (104) is a galvanometer mirror. The wobbling device (104) may be implemented into the SLM (103) or any other component of the display system (100) in an alternative embodiment.

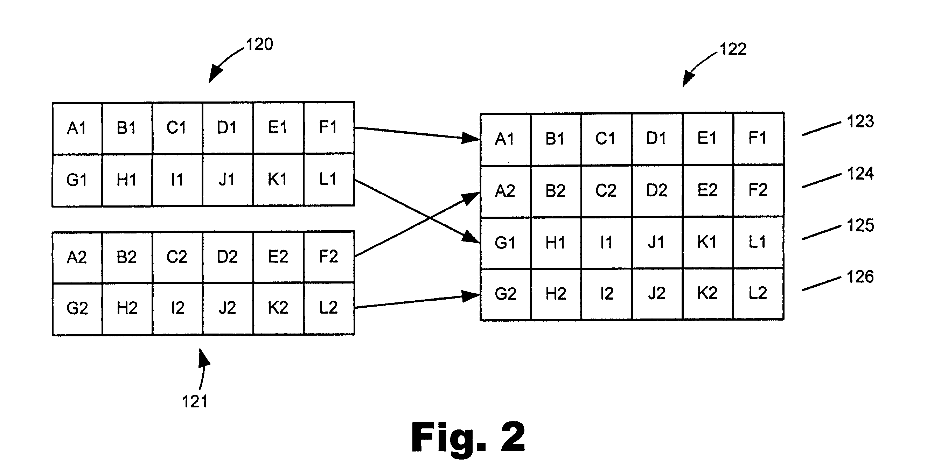

Fig. 2 illustrates the relationship between two fields and their corresponding interfaced image frame that is to be displayed by the display system (100; Fig. 1). Fig. 2 shows two exemplary fields―a top field (120) and a bottom field (121). As shown in Fig. 2, both the top and bottom fields (120, 121) comprise data that define twelve pixels arranged in six by two arrays or matrix. Thus, the top and bottom fields (120, 121) comprise six vertical columns of pixel data and two horizontal rows, or lines, of pixel data. There are six columns and two rows of pixel data in each field of Fig. 2 for illustrative purposes only. It will be recognized that the number of columns and rows of pixel data in the fields will vary as best serves a particular application.

As shown in Fig. 2, the top field (120) comprises two lines of pixel data. The first line of the top field (120) comprises pixel data for pixels A1, B1, C1, D1, E1, and F1. The second line of the top field (120) comprises pixel data for pixels G1, H1, I1, J1, K1, and L1. Likewise, the bottom field (121) also comprises two lines of pixel data. The first line of the bottom field (121) comprises pixel data for pixels A2, B2, C2, D2, E2, and F2. The second line of the bottom field (121) comprises pixel data for pixels G2, H2, I2, J2, K2, and L2.

Fig. 2 shows the relationship between the top and bottom fields (120, 121) and a corresponding interlaced image frame (122) that is displayed by the display system (100; Fig. 1). Fig. 2 shows that the interlaced image frame (122) comprises four lines of pixel data (123-126). Each line of pixel data corresponds to one of the lines in either the top field (120) or the bottom field (121). In one embodiment, the first line (123) of the interlaced image frame (122) is the first line of the top field (120), the second line (124) of the interlaced image frame (122) is the first line of the bottom field (121), the third line (125) of the interlaced image frame (122) is the second line of the top field (120), and the fourth line (126) of the interlaced image frame (122) is the second line of the bottom field (121). In general, the odd lines of the interlaced image frame (122) correspond to the lines in the top field (120) and the even lines of the interlaced image frame (122) correspond to the lines in the bottom field (121). However, as will be understood by one skilled in the art, the odd lines of the interlaced image frame (122) may correspond to the lines in the bottom field (121) and the even lines of the interlaced image frame (122) may correspond to the lines in the top field (120).

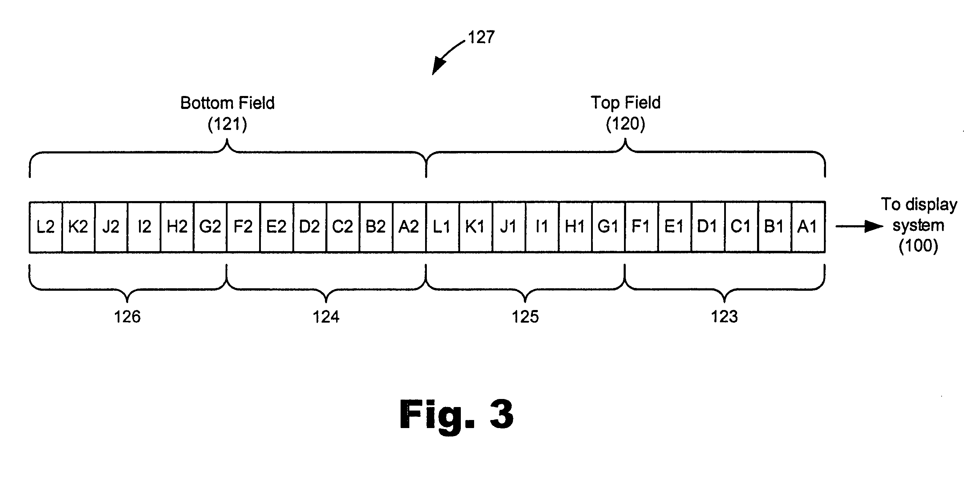

Fig. 3 illustrates an exemplary interlaced video data sequence (127), or stream, that may be input into the display system (100; Fig. 1). The interlaced video data sequence defines the interlaced image frame (122; Fig. 2) of Fig. 2. As shown in Fig. 3, the interlaced video data sequence comprises a one dimensional sequence of data defining the pixels found in the interlaced image frame (122; Fig. 2). In one embodiment, the pixel data of all the lines in the top field (120) are sequentially input into the display system (100; Fig. 1) before the pixel data of all the lines in the bottom field (121) are sequentially input into the display system (100; Fig. 1). For example, as shown in Fig. 3, the first and third lines (123, 125) of pixel data are first input into the display system (100; Fig. 1). The first pixel data element in the first line (123) of the top field (120) corresponds to the pixel A1 in Fig. 3. Likewise, the first pixel data element in the next line of the top field (120) (i.e. the third line (125) of the image frame (122)) corresponds to the pixel G1. After the top field's (120) corresponding pixel data are input into the display system (100; Fig. 1), the second and fourth lines (124, 126) of pixel data are input into the display system (100; Fig. 1). The first pixel data element in the first line of bottom field (121) (i.e. the second line (124) of the image frame (122)) corresponds to the pixel A2 in Fig. 3. Likewise, the first pixel data element in the next line of the bottom field (121) (i.e. the fourth line (126) of the image frame (122)) corresponds to the pixel G2. In an alternative embodiment, the lines of pixel data corresponding to the bottom field (121) are input into the display system (100; Fig. 1) before the lines of pixel data corresponding to the top field (120).

According to one embodiment, the interlaced video data may comprise digital image data, analog image data, or a combination of analog and digital data. The image processing unit (106) may be configured to receive and process digital image data and/or analog image data.

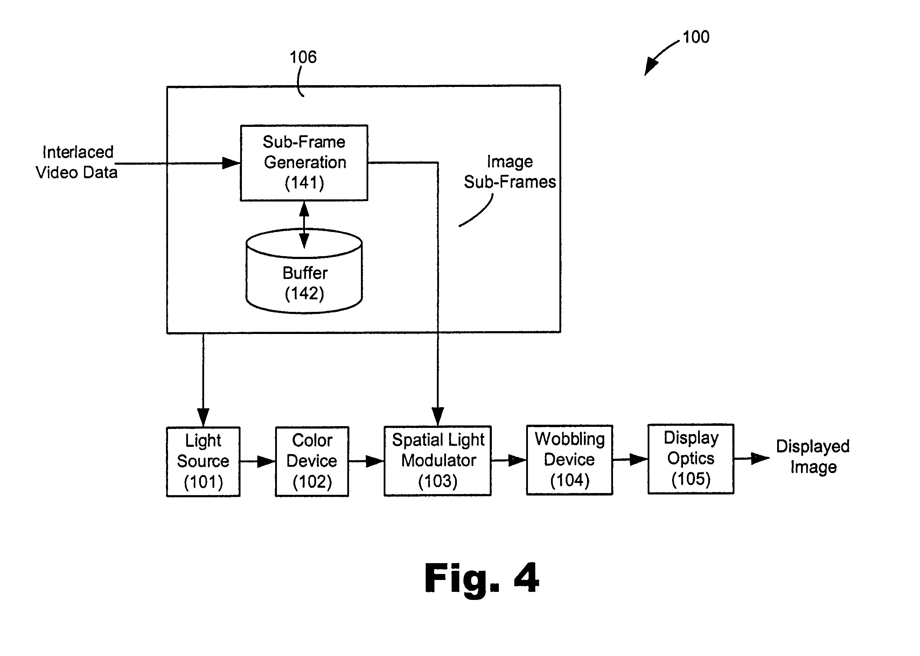

Fig. 4 illustrates the same display system (100) of Fig. 1 with an expanded view of exemplary functions inside the image processing unit (106). In one embodiment, as shown in Fig. 4, the image processing unit (106) comprises sub-frame generation function (141) and a buffer (142). As described below, the sub-frame generation function (141) processes interlaced video data and generates a number of image sub-frames. The sub-frames, as will be explained below, are displayed by the display system (100) to produce a displayed image. The buffer (142) may be used to buffer interlaced video data in the formation of the image sub-frames. The buffer (142) includes memory for storing the image data for one or more image frames of respective images. For example, the buffer (142) may comprise non-volatile memory such as a hard disk drive or other persistent storage device or include volatile memory such as random access memory (RAM). However, the buffer (142) may not be a necessary component of some display systems.

The image processing unit (106), including the image sub-frame generation function (141) and buffer (142), includes hardware, software, firmware, or a combination of these. In one embodiment, one or more components of the image processing unit (106) are included in a computer, computer server, or other microprocessor-based system capable of performing a sequence of logic operations. In addition, the image processing may be distributed throughout the display system (100) with individual portions of the image processing unit (106) being implemented in separate system components.

In one embodiment, the sub-frame generation function (141) receives and processes interlaced video data corresponding to an interlaced image frame that is to be displayed and generates a number of image sub-frames corresponding to the image frame. Each of the image sub-frames comprises a data array or matrix that represents a subset of the image data corresponding to the image frame that is to be displayed. When an image sub-frame is displayed, an image defined by the image sub-frame's data array is displayed. Because, as will be explained below, each image sub-frame is displayed in spatially different image sub-frame locations, each of the image sub-frames' data arrays comprise different pixel data.

In one embodiment, each image sub-frame corresponding to an interlaced image frame is input to the SLM (103). The SLM (103) modulates a light beam in accordance with the sub-frames and generates a light beam bearing the sub-frames. The light beam bearing the individual image subframes is eventually displayed by the display optics (105) to create a displayed image. However, after light corresponding to each image sub-frame in a group of sub-frames is modulated by the SLM (103) and before each image sub-frame is displayed by the display optics (105), the wobbling device (104) shifts the position of the light path between the SLM (103) and the display optics (105). In other words, the wobbling device shifts the pixels such that each image sub-frame is displayed by the display optics (105) in a slightly different spatial position than the previously displayed image sub-frame. The wobbling device (104) may shift the pixels such that the image sub-frames are offset from each other by a vertical distance and/or by a horizontal distance, as will be described below.

According to an exemplary embodiment, each of the image sub-frames in a group of sub-frames corresponding to an image is displayed by the display optics (105) at a high rate such that the human eye cannot detect the rapid succession between the image sub-frames. Instead, the rapid succession of the image sub-frames appears as a single displayed image. As will now be described in detail, by sequentially displaying the image sub-frames in spatially different positions, the apparent resolution of the finally displayed image is enhanced.

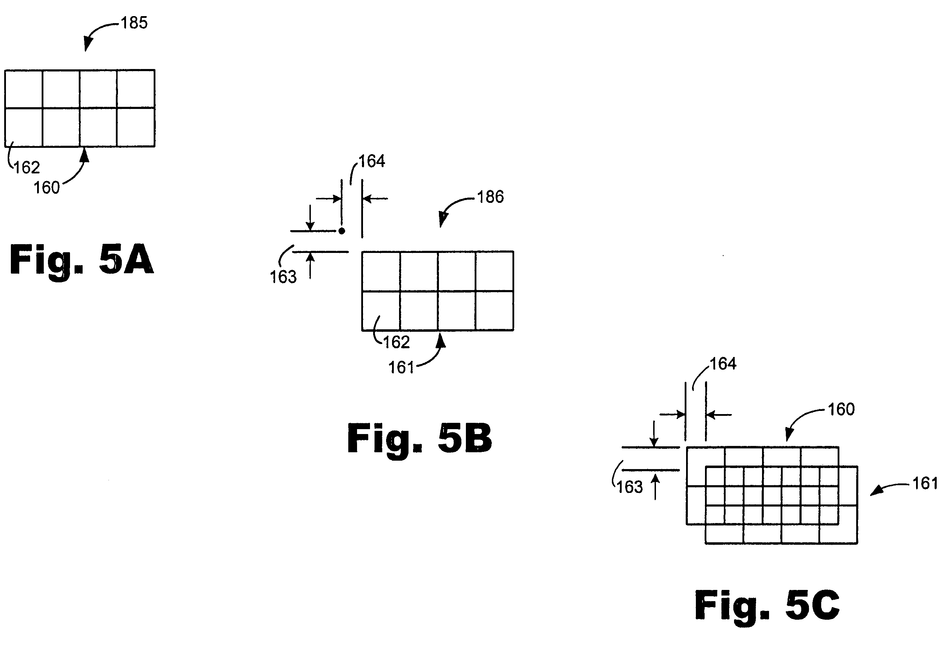

Figs. 5-8 will be used to illustrate an exemplary spatial displacement of image sub-frames by an exemplary wobbling device. Figs. 5A-C illustrate an exemplary embodiment wherein a number of image sub-frames are generated for a particular image. As illustrated in Figs. 5A-C, the exemplary image processing unit (106) generates two image sub-frames for a particular image frame. More specifically, the image processing unit (106) generates a first sub-frame (160) and a second sub-frame (161) for the image frame. Although the image sub-frames in this example and in subsequent examples are generated by the image processing unit (106), it will be understood that the image sub-frames may be generated by the sub-frame generation function (142) or by a different component of the display system (100). Although the exemplary image processing unit (106) generates two image sub-frames in the example of Figs. 5A-C, it will be understood that two image sub-frames are an exemplary number of image sub-frames that may be generated by the image processing unit (106) and that any number of image sub-frames may be generated according to an exemplary embodiment.

In one embodiment, as illustrated in Fig. 5B, the first image sub-frame (160) is displayed in a first image sub-frame location (185). The second sub-frame (161) is displayed in a second image sub-frame location (186) that is offset from the first sub-frame location (185) by a vertical distance (163) and a horizontal distance (164). As such, the second sub-frame (161) is spatially offset from the first sub-frame (160) by a predetermined distance. In one illustrative embodiment, as shown in Fig. 5C, the vertical distance (163) and horizontal distance (164) are each approximately one-half of one pixel. However, the spatial offset distance between the first image sub-frame location (185) and the second image sub-frame location (186) may vary as best serves a particular application. In an alternative embodiment, the first sub-frame (160) and the second sub-frame (161) may only be offset in either the vertical direction or in the horizontal direction in an alternative embodiment. In one embodiment, the wobbling device (104; Fig. 4) is configured to offset the beam of light between the SLM (103; Fig. 4) and the display optics (105; Fig. 4) such that the first and second sub-frames (160, 161; Fig. 5) are spatially offset from each other.

As illustrated in Fig. 5C, the display system (100; Fig. 4) alternates between displaying the first sub-frame (160) in the first image sub-frame location (185) and displaying the second sub-frame (161) in the second image sub-frame location (186) that is spatially offset from the first image sub-frame location (185). More specifically, the wobbling device (104; Fig. 4) shifts the display of the second sub-frame (161) relative to the display of the first sub-frame (160) by the vertical distance (163) and by the horizontal distance (164). As such, the pixels of the first sub-frame (160) overlap the pixels of the second sub-frame (161). In one embodiment, the display system (100; Fig. 4) completes one cycle of displaying the first sub-frame (160) in the first image sub-frame location (185) and displaying the second sub-frame (161) in the second image sub-frame location (186) resulting in a displayed image with an enhanced apparent resolution. Thus, the second sub-frame (161) is spatially and temporally displayed relative to the first sub-frame (160).

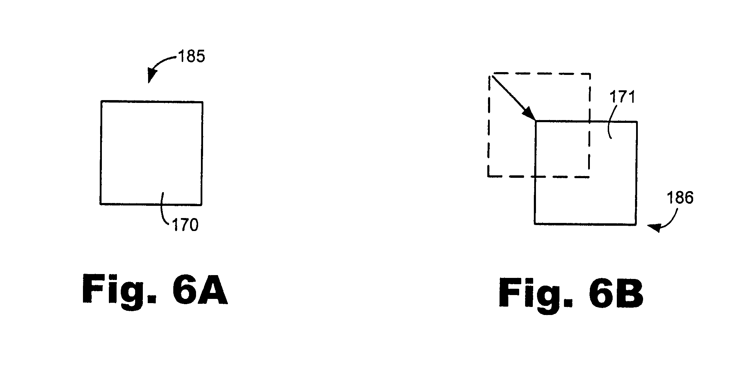

Figs. 6A-B illustrate an exemplary embodiment of completing one cycle of displaying a pixel (170) from the first sub-frame (160) in the first image sub-frame location (185) and displaying a pixel (171) from the second sub-frame (161) in the second image sub-frame location (186). Fig. 6A illustrates the display of the pixel (170) from the first sub-frame (160) in the first image sub-frame location (185). Fig. 6B illustrates the display of the pixel (171) from the second sub-frame (161) in the second image sub-frame location (186). In Fig. 6B, the first image sub-frame location (185)is illustrated by dashed lines.

Thus, by generating a first and second sub-frame (160, 161) and displaying the two sub-frames in the spatially offset manner as illustrated in Figs 5A-C and Figs. 6A-B, twice the amount of pixel data is used to create the finally displayed image as compared to the amount of pixel data used to create a finally displayed image without using the image sub-frames. Accordingly, with two-position processing, the resolution of the finally displayed image is increased by a factor of approximately 1.4 or the square root of two.

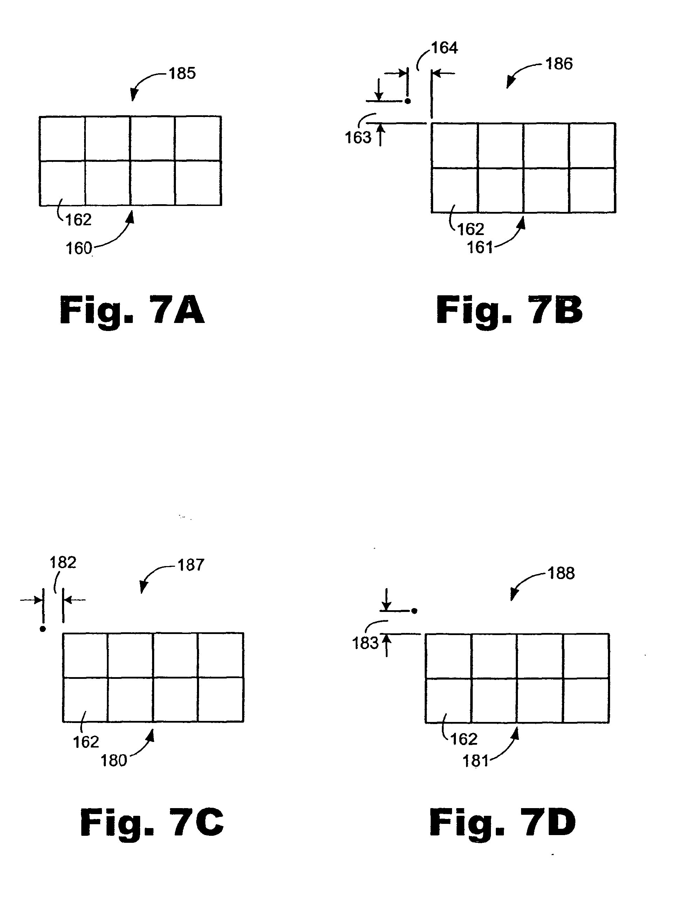

In another embodiment, as illustrated in Figs. 7A-D, the image processing unit (106) defines four image sub-frames for an image frame. More specifically, the image processing unit (106) defines a first sub-frame (160), a second sub-frame (161), a third sub-frame (180), and a fourth sub-frame (181) for the image frame.

In one embodiment, as illustrated in Fig. 7B-D, the first image sub-frame (160) is displayed in a first image sub-frame location (185). The second image sub-frame (161) is displayed in a second image sub-frame location (186) that is offset from the first sub-frame location (185) by a vertical distance (163) and a horizontal distance (164). The third sub-frame (180) is displayed in a third image sub-frame location (187) that is offset from the first sub-frame location (185) by a horizontal distance (182). The horizontal distance (182) may be, for example, the same distance as the horizontal distance (164). The fourth sub-frame (181) is displayed in a fourth image sub-frame location (188) that is offset from the first sub-frame location (185) by a vertical distance (183). The vertical distance (183) may be, for example, the same distance as the vertical distance (163). As such, the second sub-frame (161), the third sub-frame (180), and the fourth sub-frame (181) are each spatially offset from each other and spatially offset from the first sub-frame (160) by a predetermined distance. In one illustrative embodiment, the vertical distance (163), the horizontal distance (164), the horizontal distance (182), and the vertical distance (183) are each approximately one-half of one pixel. However, the spatial offset distance between the four sub-frames may vary as best serves a particular application. In one embodiment, the wobbling device (104; Fig. 4) is configured to offset the beam of light between the SLM (103; Fig. 4) and the display optics (105; Fig. 4) such that the first, second, third, and fourth sub-frames (160, 161, 180, 181; Fig. 5) are spatially offset from each other.

In one embodiment, the display system (100; Fig. 4) completes one cycle of displaying the first sub-frame (160) in the first image sub-frame location (185), displaying the second sub-frame (161) in the second image sub-frame location (186), displaying the third sub-frame (180) in the third image sub-frame location (187), and displaying the fourth sub-frame (181) in the fourth image sub-frame location (188) resulting in a displayed image with an enhanced apparent resolution. Thus the second sub-frame (161), the third sub-frame (180), and the fourth sub-frame (181) are spatially and temporally displayed relative to each other and relative to first sub-frame (160).

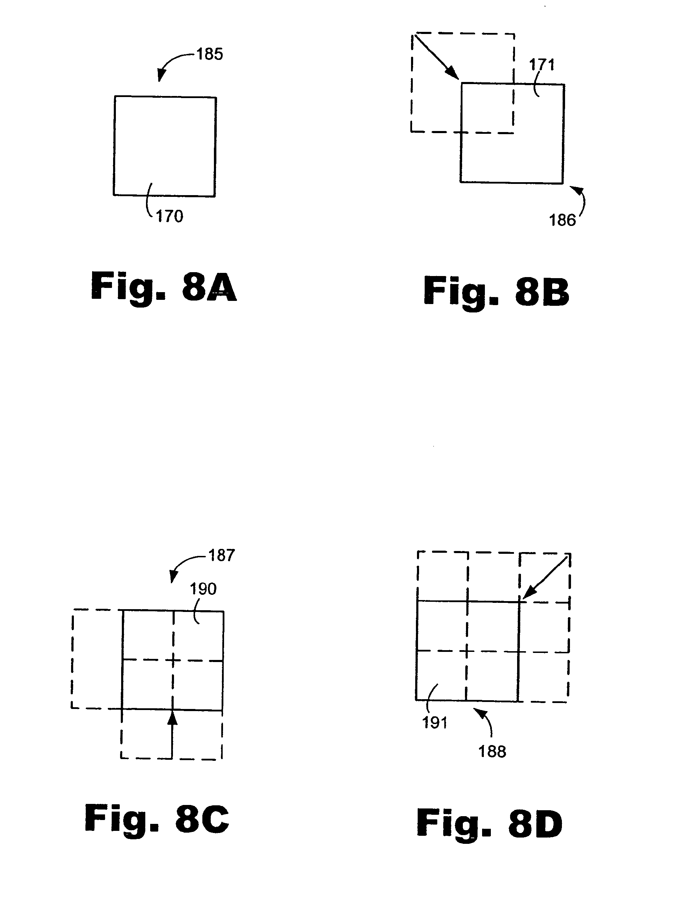

Figs. 8A-D illustrate an exemplary embodiment of completing one cycle of displaying a pixel (170) from the first sub-frame (160) in the first image sub-frame location (185), displaying a pixel (171) from the second sub-frame (161) in the second image sub-frame location (186), displaying a pixel (190) from the third sub-frame (180) in the third image sub-frame location (187), and displaying a pixel (191) from the fourth sub-frame (170) in the fourth image sub-frame location (188). Fig. 8A illustrates the display of the pixel (170) from the first sub-frame (160) in the first image sub-frame location (185). Fig. 8B illustrates the display of the pixel (171) from the second sub-frame (161) in the second image sub-frame location (186) (with the first image sub-frame location being illustrated by dashed lines). Fig. 8C illustrates the display of the pixel (190) from the third sub-frame (180) in the third image sub-frame location (187) (with the first position and the second position being illustrated by dashed lines). Finally, Fig. 8D illustrates the display of the pixel (191) from the fourth sub-frame (170) in the fourth image sub-frame location (188) (with the first position, the second position, and the third position being illustrated by dashed lines).

Thus, by generating four image sub-frames and displaying the four sub-frames in the spatially offset manner as illustrated in Figs. 7A-D and Figs. 8A-D, four times the amount of pixel data is used to create the finally displayed image as compared to the amount of pixel data used to create a finally displayed image without using the image sub-frames. Accordingly, with four-position processing, the resolution of the finally displayed image is increased by a factor of two or the square root of four.

Thus, as shown by the examples in Figs. 5-8, by generating a number of image sub-frames for an image frame and spatially and temporally displaying the image sub-frames relative to each other, the display system (100; Fig. 4) can produce a displayed image with a resolution greater than that which the SLM (103; Fig. 4) is configured to display. In addition, by overlapping pixels of image sub-frames, the display system (100; Fig. 4) may reduce the undesirable visual effects caused, for example, by a defective pixel. For example, if four sub-frames are generated by the image processing unit (106; Fig. 4) and displayed in offset positions relative to each other, the four sub-frames effectively diffuse the undesirable effect of the defective pixel because a different portion of the image that is to be displayed is associated with the defective pixel in each sub-frame. A defective pixel is defined to include an aberrant or inoperative display pixel such as a pixel which exhibits only an "on" or "off" position, a pixel which produces less intensity or more intensity than intended, and/or a pixel with inconsistent or random operation.

Exemplary processes whereby image sub-frames are generated using interlaced video data as the input to the display system (100; Fig. 1) will now be described. In one embodiment, the image processing unit (106; Fig. 4) processes the interlaced video data directly and generates one or more image sub-frames corresponding to a top field and one or more image sub-frames corresponding to a bottom field without first de-interlacing the interlaced video data (i.e.; converting the interlaced video data to progressive video data). Processing the interlaced video data directly greatly reduces the complexity of the image processing and the required size of the buffer (142; Fig. 4) that are associated with first converting the interlaced video data to a progressive video data before generating the image sub-frames.

In one embodiment, the image processing unit (106; Fig. 4) generates a first image sub-frame (160) corresponding to the top field (120) of pixel data in the interlaced video data sequence (127) and a second image sub-frame (161) corresponding to the bottom field (121) of pixel data in the interlaced video data sequence (127). The first and second image sub-frames (160, 161) may then be displayed in a first and second image sub-frame location (185, 186), respectively, as illustrated in connection with Fig. 5. The first and second sub-frames (160, 161) corresponding to the top and bottom fields (120, 121) may be generated using a number of differing methods. A number of exemplary, but not exclusive, methods will now be described for explanatory purposes. The exact method of generating the first and second image sub-frames (160, 161) will vary as best serves a particular application.

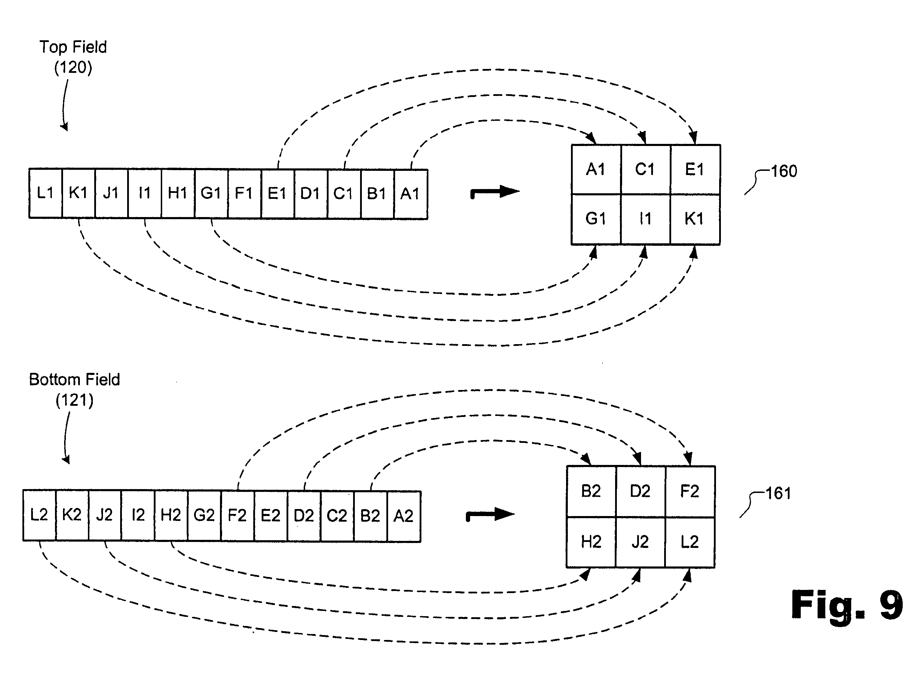

Fig. 9 illustrates an exemplary method of generating a first and second image sub-frame (160, 161 ) corresponding to the top and bottom fields (120, 121) of an exemplary interlaced video data sequence (127). The first and second image sub-frames (160, 161) may be displayed in the first and second image sub-frame locations (185, 186) as explained in connection with Figs. 5A-C for example. The interlaced video data sequence (127) of Fig. 3 will be used for illustrative purposes. Thus, each line in the top and bottom fields (120, 121) comprise six elements of pixel data. However, as will be recognized by one skilled in the art, the interlaced video data sequence (127) may comprise more or less pixel data for the top and bottom fields (120, 121). For example, the top and bottom fields (120, 121) may each comprise 540 lines of pixel data and 1920 columns of pixel data.

The method of Fig. 9 may be used when it is desired to generate a first and second image sub-frame (160, 161) that are to be input into a modulator comprising one half the number of columns and lines of pixels than does the image frame defined by the interlaced video data sequence (127). For example, if the image frame is six by four (i.e.; six columns of pixel data and four lines of pixel data), the modulator is three by two pixels. In one embodiment, if the modulator comprises half the number of pixels than does the image frame, the number of pixel data elements in each line of the interlaced video data sequence (127) is reduced in half so that the finally displayed image after the two image sub-frames are displayed in alternating image sub-frame locations is the desired resolution. A "pixel data element" will be used herein and in the appended claims to refer to pixel data defining a pixel. Thus, as used herein and in the appended claims, the pixel data elements "in the top field" refer to the pixel data elements that define the pixels located in the top field of the interlaced image frame. Likewise, the pixel data elements "in the bottom field" refer to the pixel data elements that define the pixels located in the bottom field of the interlaced image frame.

Thus, as shown in Fig. 9, the first and second image sub-frames (160, 161) each comprise half the number of columns and half the number of lines of pixel data as does the corresponding image frame. For example, the first and second image sub-frames (160, 161) shown in Fig. 9 each comprise three columns and two lines of pixel data. Because each whole interlaced input field comes into the display system (100; Fig. 4) sequentially, the generation of the lines of pixel data for each of the image sub-frames (160, 161) is automatically accomplished. Fig. 9 illustrates an exemplary method of reducing the number of pixel data elements in each line of pixel data in half. In one embodiment, as shown in Fig. 9, the image processing unit (106; Fig. 4) may use, or process, every other pixel data element in the top field (120) of the interlaced video data sequence (127) starting with the first pixel data element to generate the first image sub-frame (160). Thus, the first line of the first image sub-frame (160) comprises the pixel data elements A1, C1, and E1. The second line of the first image sub-frame (160) comprises the pixel data elements G1, I1, and K1.

In one embodiment, as shown in Fig. 9, the image processing unit (106; Fig. 4) may use, or process, every other pixel data element in the bottom field (121) of the interlaced video data sequence (127) starting with the second pixel data element to generate the second image sub-frame (161). Thus, the first line of the second image sub-frame (161) comprises the pixel data elements B2, D2, and F2. The second line of the second image sub-frame (161) comprises the pixel data elements H2, J2, and L2.

Fig. 9 illustrates that every other pixel element starting with the first pixel element in the top field (120) is processed to generate the first image sub-frame (160) and that every other pixel element starting with the second pixel element in the bottom field (121) is processed to generate the second image sub-frame (161). However, in an alternative embodiment, the method illustrated in Fig. 9 may use, or process, every other pixel element starting with the second pixel element in the top field (120) to generate the first image sub-frame (160) and every other pixel element starting with the first pixel element in the bottom field (121) to generate the second image sub-frame (161).

The exemplary method of Fig. 9 does not require the use of the buffer (142; Fig. 4). Furthermore, the image processing required is minimal. Thus, the exemplary method of Fig. 9 may reduce the cost and size of an exemplary display system.

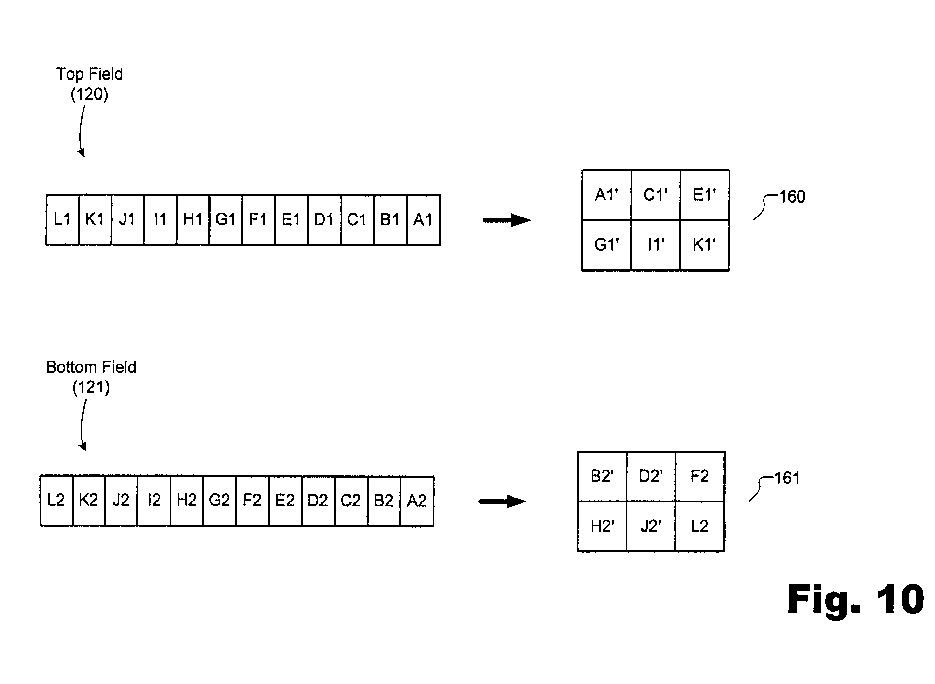

Fig. 10 illustrates another exemplary method that may be used to generate a first and second image sub-frame (160, 161) that are to be input into a modulator comprising one half the number of columns and lines of pixels than does the image frame defined by the interlaced video data sequence (127).

The first and second image sub-frames (160, 161) of Fig. 10 each comprise half the number of columns and half the number of lines of pixel data as does the corresponding image frame. For example, the first and second image sub-frames (160, 161) shown in Fig. 10 each comprise three columns and two lines of pixel data. Because each whole interlaced input field comes into the display system (100; Fig. 4) sequentially, the generation of the lines of pixel data for each of the image sub-frames (160, 161) is automatically accomplished. Fig. 10 illustrates an exemplary method of reducing the number of pixel data elements in each line of pixel data in half without the skipping of every other pixel data element as described in connection with Fig. 9.

In one embodiment, as shown in Fig. 10, the image processing unit (106; Fig. 4) may average each pair of neighboring pixel data elements in the top field (120) of the interlaced video data sequence (127) starting with the first pixel data element to generate the first image sub-frame (160). For example, the image processing unit (106; Fig. 4) may first take the average of the pixel data elements A1 and B1. The resulting averaged value is A1'. One exemplary, but not exclusive, method of calculating A1' is adding the values of A1 and B1 and then diving the resulting sum by 2. In other words, A1' = (A1 + B1)/2. The image processing unit (106; Fig. 4) places A1' in the first position of the first line of the first image sub-frame (160), as shown in Fig. 10. Likewise, the image processing unit (106; Fig. 4) calculates the average of the remaining pairs of neighboring pixel data elements in each line of the top field (120) to generate C1', E1', G1', I1', and K1'. These averaged values are then placed in the remaining positions of the first image sub-frame (160). In the example of Fig. 10, C1' is the average of the pixel data elements C1 and D1. E1' is the average of the pixel data elements E1 and F1. G1' is the average of the pixel data elements G1 and H1. I1' is the average of the pixel data elements I1 and J 1. K1' is the average of the pixel data elements K1 and L1.

Thus, the first line of the first image sub-frame (160) comprises the pixel data elements A1', C1', and E1'. The second line of the first image sub-frame (160) comprises the pixel data elements G1', I1', and K1'.

In one embodiment, as shown in Fig. 10, the image processing unit (106; Fig. 4) may average each pair of neighboring pixel data elements in the bottom field (121) of the interlaced video data sequence (127) starting with the second pixel data element to generate the second image sub-frame (161). For example, the image processing unit (106; Fig. 4) may first take the average of the pixel data elements B2 and C2. The resulting averaged value is B2'. One exemplary method of calculating B2' is adding the values of B2 and C2 and then diving the resulting sum by 2. In other words, B2' = (B2 + C2)/2. The image processing unit (106; Fig. 4) places B2' in the first position of the first line of the second image sub-frame (161), as shown in Fig. 10. Likewise, the image processing unit (106; Fig. 4) calculates the average of the remaining pairs of neighboring pixel data elements in each line of the bottom field (121). In one embodiment, if there is an even number of pixel data elements in a line of the bottom field (121), the last pixel data element in the line is used as the last pixel data element in the corresponding image sub-frame. This is because there is not a neighboring pixel element next to the last pixel data element with which the last pixel data element may be averaged. Thus, in the example of Fig. 10, the image processing unit (106) generates D2', H2', and J2'. The pixel data elements F2 and L2 are not averaged with any other pixel data elements because they are the last pixel data elements in each line of the bottom field (121). In the example of Fig. 10, D2' is the average of the pixel data elements D2 and E2. H2' is the average of the pixel data elements H2 and I2. J2' is the average of the pixel data elements J2 and K2.

Thus, the first line of the second image sub-frame (161) comprises the pixel data elements B2', D2', and F2. The second line of the second image sub-frame (161) comprises the pixel data elements H2', J2', and L2.

Fig. 10 illustrates that neighboring pixel elements starting with the first pixel element in the top field (120) are averaged to generate the first image sub-frame (160) and that neighboring pixel elements starting with the second pixel element in the bottom field (121) are averaged to generate the second image sub-frame (161). However, in an alternative embodiment, the method illustrated in Fig. 10 may average neighboring pixel elements starting with the second pixel element in the top field (120) to generate the first image sub-frame (160) and neighboring pixel elements starting with the first pixel element in the bottom field (121) to generate the second image sub-frame (161).

Like the exemplary method of Fig. 9, the exemplary method of Fig. 10 does not require the use of the buffer (142; Fig. 4). Furthermore, the image processing required is minimal. Thus, the exemplary method of Fig. 10 may reduce the cost and size of an exemplary display system.

The image sub-frame locations of the first and second image sub-frames (160, 161) of Figs. 9 and 10 may be alternated between two or more positions by the wobbling device (104; Fig. 4).

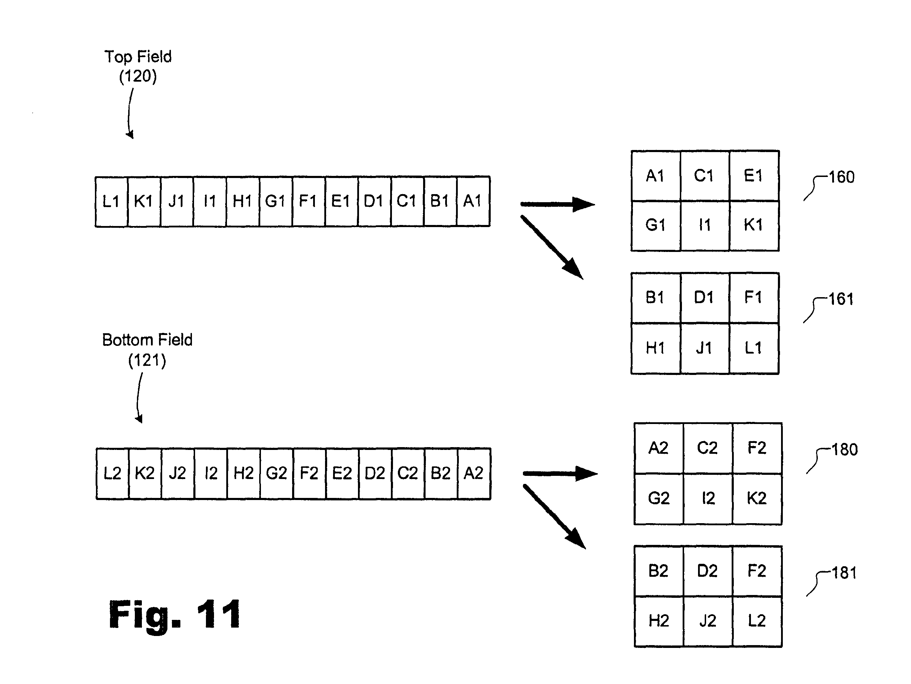

In one embodiment, the image processing unit (106; Fig. 4) generates a first image sub-frame (160) and a second image sub-frame (161) corresponding to the top field (120) of pixel data in the interlaced video data sequence (127) and a third image sub-frame (180) and a fourth image sub-frame (181) corresponding to the bottom field (121) of pixel data in the interlaced video data sequence (127). The four image sub-frames (160, 161, 180, 181) may then be displayed in four different image sub-frame locations as illustrated in connection with Fig. 7. Fig. 11 illustrates an exemplary method of generating first (160), second (161), third (180), and fourth (181) image sub-frames that are to be displayed in four image sub-frame locations as described in Fig. 7. The four image sub-frames are to be input into a modulator comprising one half the number of columns and lines of pixels than does the image frame defined by the interlaced video data sequence (127). For example, the four image sub-frames (160, 161, 180, 181) shown in Fig. 11 each comprise three columns and two lines of pixel data.

The exemplary method of Fig. 11 comprises generating two image sub-frames corresponding to the top field (120) and two image sub-frames corresponding to the bottom field (121). Because each whole interlaced input field comes into the display system (100; Fig. 4) sequentially, the generation of the lines of pixel data for each of the image sub-frames (160, 161, 180, 181) is automatically accomplished.

Fig. 11 illustrates an exemplary method of reducing the number of pixel data elements in each line of pixel data in half. In one embodiment, as shown in Fig. 11, the image processing unit (106; Fig. 4) may use, or process, every other pixel data element in the top field (120) of the interlaced video data sequence (127) starting with the first pixel data element to generate the first image sub-frame (160). Thus, the first line of the first image sub-frame (160) comprises the pixel data elements A1, C1, and E1. The second line of the first image sub-frame (160) comprises the pixel data elements G1, I1, and K1.

The image processing unit (106; Fig. 4) then may use, or process, every other pixel data element in the top field (120) of the interlaced video data sequence (127) starting with the second pixel data element to generate the second image sub-frame (161). Thus, the first line of the second image sub-frame (161) comprises the pixel data elements B1, D1, and F1. The second line of the second image sub-frame (161) comprises the pixel data elements H1, J1, and L1.

The image processing unit (106; Fig. 4) then may use, or process, every other pixel data element in the bottom field (121) of the interlaced video data sequence (127) starting with the first pixel data element to generate the third image sub-frame (180). Thus, the first line of the third image sub-frame (180) comprises the pixel data elements B2, D2, and F2. The second line of the third image sub-frame (180) comprises the pixel data elements H2, J2, and L2.

The image processing unit (106; Fig. 4) then may use, or process, every other pixel data element in the bottom field (121) of the interlaced video data sequence (127) starting with the second pixel data element to generate the fourth image sub-frame (181). Thus, the first line of the fourth image sub-frame (181) comprises the pixel data elements B2, D2, and F2. The second line of the fourth image sub-frame (181) comprises the pixel data elements H2, J2, and L2.

The four image sub-frames (160, 161, 180, 181) described in connection with Fig. 11 may be displayed in any of the four image sub-frame locations described in connection with Fig. 7. For example, in one embodiment, the first image sub-frame (160) may be displayed in the first image sub-frame location (185; Fig. 7A), the second image sub-frame (161) may be displayed in the third image sub-frame location (187; Fig. 7C), the third image sub-frame (180) may be displayed in the second image sub-frame location (186; Fig. 7B), and the fourth image sub-frame (181) may be displayed in the fourth image sub-frame location (188; Fig. 7D).

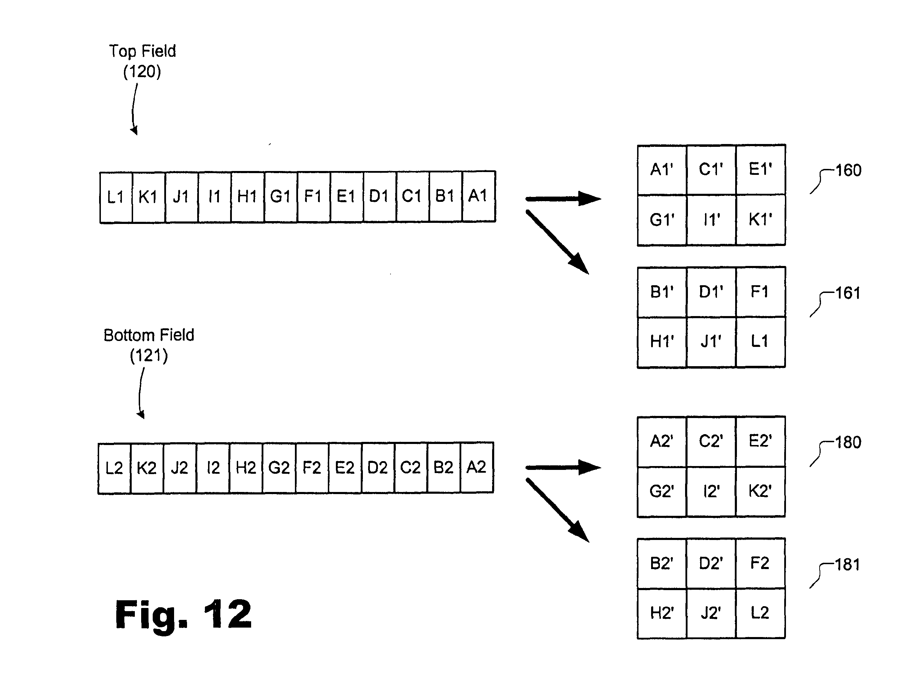

Fig. 12 illustrates another exemplary method of generating first (160), second (161), third (180), and fourth (181) image sub-frames that are to be displayed in four image sub-frame locations as described in Fig. 7. The four image sub-frames are to be input into a modulator comprising one half the number of columns and lines of pixels than does the image frame defined by the interlaced video data sequence (127). For example, the four image sub-frames (160, 161, 180, 181) shown in Fig. 12 each comprise three columns and two lines of pixel data.

The exemplary method of Fig. 12 comprises generating two image sub-frames corresponding to the top field (120) and two image sub-frames corresponding to the bottom field (121). Because each whole interlaced input field comes into the display system (100; Fig. 4) sequentially, the generation of the lines of pixel data for each of the image sub-frames (160, 161, 180, 181) is automatically accomplished.

Fig. 12 illustrates an exemplary method of reducing the number of pixel data elements in each line of pixel data in half without the skipping of every other pixel data element as described in connection with Fig. 11.

In one embodiment, as shown in Fig. 12, the image processing unit (106; Fig. 4) may average each pair of neighboring pixel data elements in the top field (120) of the interlaced video data sequence (127) starting with the first pixel data element to generate the first image sub-frame (160). The averaging of the neighboring pixel data elements is described in connection with Fig. 10. Thus, the first line of the first image sub-frame (160) comprises the pixel data elements A1', C1', and E1'. The second line of the first image sub-frame (160) comprises the pixel data elements G1', I1', and K1'.

The image processing unit (106; Fig. 4) may then average each pair of neighboring pixel data elements in the top field (120) of the interlaced video data sequence (127) starting with the second pixel data element to generate the second image sub-frame (161). The averaging of the neighboring pixels is described in connection with Fig. 10. Thus, the first line of the second image sub-frame (161) comprises the pixel data elements B1', D1', and F1. The second line of the second image sub-frame (161) comprises the pixel data elements H1', J1', and L1. F1 and L1 are not averaged because they are the last pixel elements in their respective lines. B1' is the average of the pixel data elements B1 and C1. D1' is the average of the pixel data elements D1 and E1.

The image processing unit (106; Fig. 4) may then average each pair of neighboring pixel data elements in the bottom field (121) of the interlaced video data sequence (127) starting with the first pixel data element to generate the third image sub-frame (180). The averaging of the neighboring pixels is described in connection with Fig. 10. Thus, the first line of the third image sub-frame (180) comprises the pixel data elements A2', C2', and E2'. The second line of the third image sub-frame (180) comprises the pixel data elements G2', I2', and K2'. A2' is the average of the pixel data elements A2 and B2. C2' is the average of the pixel data elements C2 and D2. E2' is the average of the pixel data elements E2 and F2. G2' is the average of the pixel data elements G2 and H2. I2' is the average of the pixel data elements I2 and J2. K2' is the average of the pixel data elements K2 and L2.

The image processing unit (106; Fig. 4) may then average each pair of neighboring pixel data elements in the bottom field (121) of the interlaced video data sequence (127) starting with the second pixel data element to generate the fourth image sub-frame (181). The averaging of the neighboring pixels is described in connection with Fig. 10. Thus, the first line of the fourth image sub-frame (181) comprises the pixel data elements B2', D2', and F2. The second line of the fourth image sub-frame (181) comprises the pixel data elements H2', J2', and L2. F2 and L2 are not averaged because they are the last pixel elements in their respective lines.

Although the preceding exemplary methods were described in the context of a modulator (104; Fig. 4) comprising half the number of pixels of the image frame to be displayed, many other sizes of modulators may be used. Thus, the methods may be modified based on the desired resolution of the image sub-frames. For example, if the modulator comprises an equal number of pixels as the image frame, then the image processing unit (106; Fig. 4) may generate image sub-frames using each of the pixel data elements in each line.

Furthermore, as will be recognized by one skilled in the art, the above described exemplary methods of processing the pixel data elements in the top and bottom fields (120, 121) to generate image sub-frames are in no way exhaustive. Rather, there are a number of possible methods for processing the pixel data elements in the top and bottom fields (120, 121) to generate the image sub-frames.

For example, each pixel data element in a particular image sub-frame may be computed by taking some function of one or more pixel data elements in a corresponding line of a top or bottom field. For example, the function may be a linear function. The function may also be a function of all the pixel data elements in a particular line. For example, if two image sub-frames are to be generated, each pixel data element in the top line of the first image sub-frame (160) may be a function of some or all of the pixel data elements in the first line (123) of pixel data elements in the top field (120). Likewise, each pixel data element in the bottom line of the first image sub-frame (160) may be a function of some or all of the pixel data elements in the third line (125). The pixel data elements of the second image sub-frame (121) may be computed in a similar manner.

Likewise, if four image sub-frames are to be generated, each pixel data element in each of the lines of the four image sub-frames may be a function of some or all of the pixel data elements in corresponding lines of pixel data elements in the top and bottom fields. The exact function that is used to process the pixel data elements will vary as best serves a particular application.

The preceding description has been presented only to illustrate and describe embodiments of invention. It is not intended to be exhaustive or to limit the invention to any precise form disclosed. Many modifications and variations are possible in light of the above teaching. It is intended that the scope of the invention be defined by the following claims.

## Claims

1. A display system (100) for displaying an interlaced image frame (122), said interlaced image frame (122) comprising a top field (120) and a bottom field (121), said top and bottom fields (120,121) each having lines of pixels, said system comprising:
an image processing unit (106) configured to process a stream of pixel data elements sequentially corresponding to said pixels in said top and bottom fields (120,121) and generate a number of image sub-frames;
a modulator (103) configured to generate a light beam bearing said number of image sub-frames; and
a wobbling device (104) configured to displace said light beam such that each of said image sub-frames is spatially displayed offset from a previous image sub-frame;
wherein at least one of said image sub-frames is generated using only said pixel data elements in said top field (120) and at least one of said image sub-frames is generated using only said pixel data elements in said bottom field (121).

2. The system of claim 1, wherein said image processing unit (106) is configured to process said pixel data elements in said top field (120) to generate a first image sub-frame and said pixel data elements in said bottom field (121) to generate a second image sub-frame.

3. The system of claim 2, wherein:
said first image sub-frame is displayed in a first image sub-frame location; and
said second image sub-frame is displayed in a second image sub-frame location;
wherein said second image sub-frame location is spatially offset by an offset distance from said first image sub-frame location.

4. The system of claim 2, wherein said image processing unit (106) is further configured to:
process every other pixel data element in said top field (120) starting with a first pixel data element in said top field to generate said first image sub-frame; and
process every other pixel data element in said bottom field (121) starting with a second pixel data element in said bottom field to generate said second image sub-frame.

5. The system of claim 1, wherein said image processing unit (106) is configured to:
process said pixel data elements in said top field (120) to generate a first image sub-frame and a second image sub-frame; and
process said pixel data elements in said bottom field (121) to generate a third image sub-frame and a fourth image sub-frame.

6. The system of claim 1, further comprising display optics (105) configured to display said light beam on a viewing surface.

7. A method of displaying an interlaced image frame(122), said interlaced image frame (122) comprising a top field (120) and a bottom field (121), said top and bottom fields (120,121) each having lines of pixels, said method comprising:
processing a stream of pixel data elements sequentially corresponding to said pixels in said top and bottom fields (120,121) and generating a number of image sub-frames corresponding to said top and bottom fields (120,121); and
displaying each of said image sub-frames offset from a previous image sub-frame.

8. The method of claim 18, wherein said step of processing said stream of pixel data elements comprises processing said pixel data elements in said top field (120) to generate at least one of said image sub-frames and processing said pixel data elements in said bottom field (121) to generate at least one of said image sub-frames.

9. The method of claim 19, wherein said step of processing said stream of pixel data elements further comprises processing pixel data elements in said top field (120) to generate a first image sub-frame and said pixel data elements in said bottom field (121) to generate a second image sub-frame.

10. The method of claim 18, further comprising:
generating a light beam bearing said image sub-frames; and
displacing said light beam to display said image sub-frames.
